# EUROPEAN PATENT APPLICATION

(11) **EP 2 980 138 A1**
(43) Date of publication of application: **03.02.2016**
(21) Application number: 14774757.0
(22) Date of filing: 26.03.2014
(51) Int. Cl.: C08J 7/00, C08J 7/12, C08J 9/00

(54) **MANUFACTURING METHOD FOR POROUS POLYMER FILM**

(30) Priority: 27.03.2013 JP 2013066942
(71) Applicant: Nitto Denko Corporation, Ibaraki-shi, Osaka 567-8680 (JP)
(72) Inventor: FURUYAMA, Satoru, Ibaraki-shi Osaka 567-8680 (JP); MURAKI, Yuuzou, Ibaraki-shi Osaka 567-8680 (JP); NAGAI, Yozo, Ibaraki-shi Osaka 567-8680 (JP); AMINO, Ichiro, Ibaraki-shi Osaka 567-8680 (JP); YURI, Yosuke, Takasaki-shi Gunma 370-1292 (JP); YUYAMA, Takahiro, Takasaki-shi Gunma 370-1292 (JP); ISHIZAKA, Tomohisa, Takasaki-shi Gunma 370-1292 (JP); ISHIBORI, Ikuo, Takasaki-shi Gunma 370-1292 (JP); YOSHIDA, Ken-ichi, Takasaki-shi Gunma 370-1292 (JP); MAEKAWA, Yasunari, Takasaki-shi Gunma 370-1292 (JP); KOSHIKAWA, Hiroshi, Takasaki-shi Gunma 370-1292 (JP); YAMAKI, Tetsuya, Takasaki-shi Gunma 370-1292 (JP); ASANO, Masaharu, Takasaki-shi Gunma 370-1292 (JP)
(74) Representative: Hart-Davis, Jason
(86) International application number: PCT/JP2014/001756
(87) International publication number: WO 2014/156154

(57) **Abstract**

The method of the present disclosure includes: (I) irradiating a polymer film (1) with an ion beam composed of ions (2) accelerated in a cyclotron so as to form a polymer film that has collided with the ions in the beam; and (II) chemically etching the polymer film formed in the irradiation (I) so as to form openings (4b) and/or through holes (4a) corresponding to tracks (3) left by the colliding ions in the polymer film. In the irradiation (I), a beam current value of the ion beam is detected upstream and/or downstream of the polymer film in a path of the ion beam, and an irradiation conditioning factor in the irradiation of the polymer film with the ion beam is controlled based on the detected beam current value so that the polymer film can be irradiated with the ions at a predetermined irradiation density. The method of the present disclosure is suitable for industrial production of porous polymer films.

## Description

### TECHNICAL FIELD

The present invention relates to a method for producing a porous polymer film using ion beam irradiation.

### BACKGROUND ART

Methods for producing porous polymer films by ion beam irradiation and subsequent chemical etching are known (see, for example, Patent Literatures 1 to 3). When a polymer film is irradiated with an ion beam, damage of the polymer chains in the polymer film occurs due to collision with the ions in regions of the polymer film through which the ions have passed. The damaged polymer chains are more susceptible to chemical etching than other regions of the film. Therefore, by chemically etching the ion-beam-irradiated polymer film, pores corresponding to the tracks of the colliding ions are formed in the polymer film, and thus a porous polymer film having the pores is obtained.

Patent Literature 3 describes an example in which a polymer film is irradiated with ions accelerated in an accelerator.

### CITATION LIST

### Patent Literature

Patent Literature 1: JP 52(1977)-003987 B
Patent Literature 2: JP 54(1979)-011971 A
Patent Literature 3: JP 59(1984)-117546 A

### SUMMARY OF INVENTION

### Technical Problem

In the methods disclosed in Patent Literatures 1 to 3, due consideration is not given to industrial production of porous polymer films. One of the objects of the present disclosure is to provide a method suitable for industrial production of porous polymer films.

### Solution to Problem

The production method of the present disclosure includes: (I) irradiating a polymer film with an ion beam composed of ions accelerated in a cyclotron so as to form a polymer film that has collided with the ions in the beam; and (II) chemically etching the formed polymer film so as to form openings and/or through holes corresponding to tracks left by the colliding ions in the polymer film. In the irradiation (I), a beam current value of the ion beam is detected upstream and/or downstream of the polymer film in a path of the ion beam, and an irradiation conditioning factor in the irradiation of the polymer film with the ion beam is controlled based on the detected beam current value so that the polymer film can be irradiated with the ions at a predetermined irradiation density.

### Advantageous Effects of Invention

The production method of the present disclosure is suitable for industrial production of porous polymer films.

### BRIEF DESCRIPTION OF DRAWINGS

FIG. 1 is a schematic diagram for explaining the irradiation step (I) in the production method of the present disclosure.
FIG. 2 is a schematic diagram for explaining the etching step (II) in the production method of the present disclosure.
FIG. 3 is a schematic diagram showing an example of an arrangement of current trapping wires in an embodiment of the production method of the present disclosure.
FIG. 4 is a schematic diagram showing an embodiment of the production method of the present disclosure.
FIG. 5 is a cross-sectional view schematically showing an example of the structure of an irradiation target roll that can be used in the embodiment shown in FIG. 4.
FIG. 6A is a schematic diagram for explaining a cross section of an example of a beam (an original beam) of ions accelerated in a cyclotron, when the cross section is taken perpendicular to the direction of the beam.
FIG. 6B is a schematic diagram showing an intensity distribution (intensity distribution of the ion beam) in the x-axis direction in the cross section shown in FIG. 6A.
FIG. 7A is a diagram for explaining an example of a nonlinear magnetic field to be applied to the original beam to fold the tail of the original beam by nonlinear focusing.
FIG. 7B is a schematic diagram showing an example of the folding of the tail of the original beam by nonlinear focusing.
FIG. 8 is a schematic diagram showing a cross section of an example of the ion beam after the folding of the tail.

### DESCRIPTION OF EMBODIMENTS

A first aspect of the present disclosure provides a method for producing a porous polymer film, including: (I) irradiating a polymer film with an ion beam composed of ions accelerated in a cyclotron so as to form a polymer film that has collided with the ions in the beam; and (II) chemically etching the formed polymer film so as to form openings and/or through holes corresponding to tracks left by the colliding ions in the polymer film. In the irradiation (I), a beam current value of the ion beam is detected upstream and/or downstream of the polymer film in a path of the ion beam, and an irradiation conditioning factor in the irradiation of the polymer film with the ion beam is controlled based on the detected beam current value so that the polymer film can be irradiated with the ions at a predetermined irradiation density.

A second aspect of the present disclosure provides the method for producing a porous polymer film according to the first aspect, wherein as the irradiation conditioning factor, an intensity of the ion beam is controlled.

A third aspect of the present disclosure provides the method for producing a porous polymer film according to the second aspect, wherein the intensity of the ion beam is controlled by a beam chopper and/or a beam buncher disposed in the path of the ion beam between an ion source of the ions and the cyclotron.

A fourth aspect of the present disclosure provides the method for producing a porous polymer film according to any one of the first to third aspects, wherein as the irradiation conditioning factor, an irradiation time of the ion beam on the polymer film is controlled.

A fifth aspect of the present disclosure provides the method for producing a porous polymer film according to the fourth aspect, wherein in the irradiation (I), the polymer film having a strip shape is fed from a supply roll on which the polymer film is wound and the fed polymer film is moved transversely to the ion beam so as to irradiate the polymer film with the ion beam when the polymer film passes transversely across the ion beam, and the irradiation time is controlled by controlling a moving speed of the polymer film when the polymer film passes transversely across the ion beam.

A sixth aspect of the present disclosure provides the method for producing a porous polymer film according to any one of the first to fifth aspects, wherein the beam current value is detected by a current trapping wire disposed upstream and/or downstream of the polymer film in the path of the ion beam.

A seventh aspect of the present disclosure provides the method for producing a porous polymer film according to any one of the first to sixth aspects, wherein the beam current value is detected by a Faraday cup disposed downstream of the polymer film in the path of the ion beam.

An eighth aspect of the present disclosure provides the method for producing a porous polymer film according to any one of the first to seventh aspects, wherein in the irradiation (I), the polymer film having a strip shape is fed from a supply roll on which the polymer film is wound and the fed polymer film is moved to an irradiation target roller disposed in the path of the ion beam so as to irradiate the polymer film with the ion beam when the polymer film passes over the irradiation target roller, the irradiation target roller has a conductive layer formed on a surface thereof, and the beam current value is detected by the irradiation target roller in which the conductive layer serves as a collecting electrode.

A ninth aspect of the present disclosure provides the method for producing a porous polymer film according to any one of the first to eighth aspects, wherein the ion beam with which the polymer film is irradiated in the irradiation (I) is obtained by folding a tail of an original beam inwardly toward a center of the original beam by nonlinear focusing, the original beam being composed of the ions accelerated in the cyclotron and having a cross-sectional intensity distribution profile in which the intensity is maximum at the center of the original beam and continuously decreases from the center toward the tail of the original beam, and the profile being an intensity distribution profile in a cross section perpendicular to a direction of the original beam.

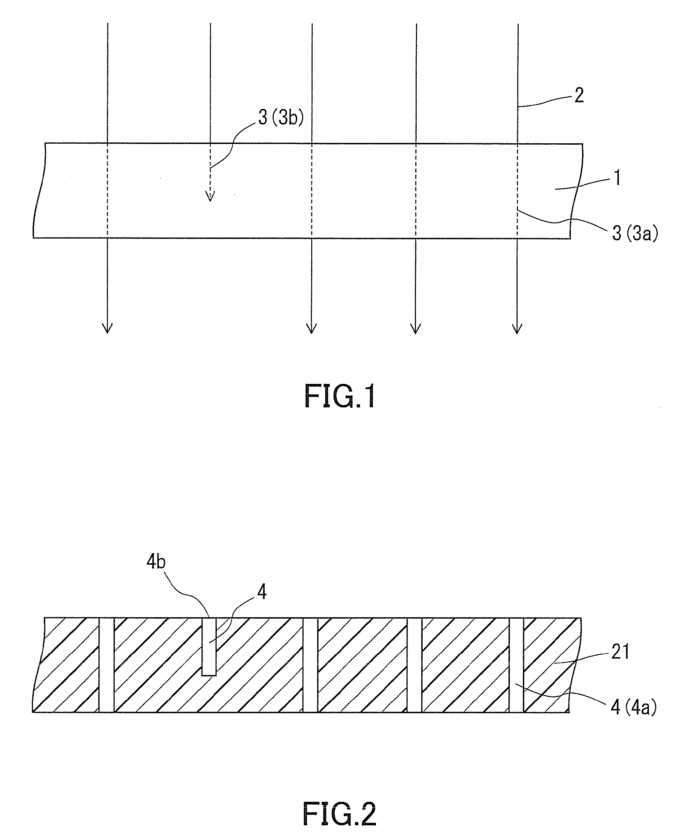

In the production method of the present disclosure, a polymer film is irradiated with an ion beam composed of accelerated ions so as to form a polymer film that has collided with the ions in the beam (Irradiation Step (I)). When a polymer film 1 is irradiated with an ion beam, ions 2 in the beam collide with the polymer film 1 and the colliding ions 2 leave tracks 3 in the film 1, as shown in FIG. 1. When the ions 2 pass through the polymer film 1, the tracks 3 passing through the film 1 (tracks 3a) are formed, whereas when the ions 2 do not pass through the polymer film 1, the tracks 3 terminated in the film 1 (tracks 3b) are formed. Whether the ions 2 pass through the polymer film 1 or not depends on the type of the ions 2 (ionic species), the energy of the ions 2, the thickness of the polymer film 1, the type of the polymer (polymeric species) constituting the polymer film 1, etc. The irradiation of the polymer film 1 with the ion beam is performed by placing the polymer film 1 in the path of the ion beam (beam line). In this irradiation, the polymer film 1 may be stationary or moving with respect to the beam line.

In the production method of the present disclosure, after the irradiation step (I), the polymer film 1 that has collided with the ions 2 is chemically etched so as to form pores corresponding to the tracks 3 left by the colliding ions 2 in the polymer film 1 and thereby obtain a porous polymer film (Etching Step (II)). In the tracks 3 of the ions 2 in the polymer film 1, the polymer chains constituting the film 1 are damaged by the collision with the ions. The damaged polymer chains are more likely to be degraded and removed by chemical etching than polymer chains that have not collided with the ions 2. Therefore, the regions of the tracks 3 in the polymer film 1 are selectively removed by chemical etching, and a porous polymer film 21 having pores 4 corresponding to the tracks 3 formed therein, as shown in FIG. 2, is obtained. The pores corresponding to the tracks 3a passing through the polymer film 1 form through holes 4a. The pores 4 corresponding to the tracks 3b terminated in the polymer film 1 form recesses having openings 4b on one surface (ion-irradiated surface) of the porous polymer film 21. In the porous polymer film 21, the openings 4b and/or the through holes 4a corresponding to the tracks 3 are formed. In this description, the "porous" refers to the presence of a plurality of openings and/or through holes thus formed. The regions of the porous polymer film 21 other than the openings 4b and the through holes 4a are essentially the same as the original polymer film 1 used in the irradiation step (I) unless an additional step of changing the state of the film is performed. These regions can be non-porous, for example.

On the size scale of the polymer film 1 as an object to be irradiated, the ions 2 colliding with the polymer film 1 usually travel almost linearly, and leave linear tracks 3 in the film 1. Therefore, the recesses having the openings 4b and the through holes 4a usually have a linearly extending shape. In this case, however, the center line of each of the recesses and the through holes 4a extends linearly, but the shape of the inner wall thereof varies with the type of the ions 2 applied to the polymer film 1 and the type of the polymer constituting the polymer film 1. This is because the interaction between the ions and the polymer varies with their species. For example, the through holes or the recesses formed in the polymer film 1 may have a straight tubular shape with an almost constant diameter in their extending direction (the thickness direction of the polymer film 1), or a so-called hourglass shape with a diameter once decreasing and increasing again in their extending direction.

### [Irradiation Step (I)]

In the irradiation step (I), the polymer film 1 is irradiated with the ion beam composed of the ions 2 accelerated in a cyclotron. The cyclotron is, for example, an AVF cyclotron. In the case where a cyclotron is used to accelerate ions generated in an ion source, it is possible to cause a high density of highly-accelerated ions to collide with the polymer film 1 continuously. For example, when the polymer films 1 are arranged in series in the beam line, the porous polymer films 21 can be produced continuously.

Further in the irradiation (I), the beam current value of the ion beam is detected upstream and/or downstream of the polymer film 1 in the path of the accelerated ions 2, and the irradiation conditioning factor in the irradiation of the polymer film 1 with the ion beam is controlled based on the detected beam current value so that the polymer film 1 can be irradiated with the ions 2 at a predetermined collision density (irradiation density). Acceleration of ions in a cyclotron makes it possible to cause the accelerated ions to collide with the polymer film continuously but makes it difficult to maintain the ion irradiation density constant over time. The ion irradiation density strongly affects the distribution of the openings and/or through holes formed by chemical etching in the etching step (II). Therefore, it is difficult to obtain porous polymer films having a controlled distribution of openings and/or through holes, for example, to obtain porous polymer films having uniformly distributed openings and/or through holes continuously only by irradiating the polymer films with an ion beam composed of ions accelerated in a cyclotron. In contrast, in the production method of the present disclosure, the beam current value of the ion beam with which the polymer film is irradiated is detected, and based on the detected beam current value (that is, by feeding back the detected beam current value), the irradiation conditioning factor in the irradiation of the polymer film 1 with the ion beam is controlled so that the polymer film 1 is irradiated with the ions 2 at a predetermined irradiation density. A combination of this control and the use of a cyclotron makes it possible to continuously obtain porous polymer films having a controlled distribution of openings and/or through holes, and thus the production method of the present disclosure is suitable for industrial production of porous polymer films.

The predetermined irradiation density can be arbitrarily set according to the distribution of openings and/or through holes in a desired porous polymer film. In order to obtain porous polymer films having uniformly distributed openings and/or through holes continuously, for example, the irradiation density can be set to a constant value. And in order to maintain the irradiation density at that constant value, the beam current value can be detected continuously or intermittently and the ion beam irradiation conditioning factor based on the detected beam current value can be controlled continuously or intermittently.

In the production method of the present disclosure, the conditioning factor in the irradiation of the polymer film with the ion beam is feedback controlled based on the beam current value of the ion beam. Not only the beam current value is closely related to the ion irradiation density, but also it is relatively easy to measure the beam current value and in addition, it is possible to detect a change in the value relatively quickly and accurately. Therefore, according to the production method of the present disclosure, it is possible not only to obtain porous polymer films having uniformly distributed openings and/or through holes continuously but also to obtain, for example, a porous polymer film having a specific pattern of distribution of openings and/or through holes. It is also possible to obtain such porous polymer films continuously by selecting the method of supplying polymer films to the beam line or the method of placing them in the beam line. It is difficult for conventional methods to achieve this type of production of porous polymer films, in particular, continuous production of porous polymer films. The specific pattern of the distribution is, for example, a gradation pattern in which the distribution of openings and/or through holes increases or decreases continuously or stepwise or a stripe pattern in which two regions or three or more regions of different patterns of the distribution appear alternately or sequentially. One of the regions in the stripe pattern may be a region having no opening and/or through hole. In order to achieve these patterns, for example, the setting of the irradiation density can be changed continuously or stepwise, for example, according to the manner in which the polymer films are arranged in the beam line.

In the irradiation step (I), the detection of the beam current value and the control of the conditioning factor in the irradiation of the polymer film with the ion beam based on the detected beam current value may be performed only once or repeatedly, and in the case where the control is performed repeatedly, it may be performed continuously or intermittently. In accelerating ions in a cyclotron, the ion irradiation density usually varies continuously. Therefore, it is preferable to repeat the detection of the beam current value and the control of the irradiation conditioning factor based on the feedback of the detected beam current value.

In the production method of the present disclosure, as the irradiation conditioning factor in the irradiation of the polymer film with the ion beam, the intensity of the ion beam (beam intensity) may be controlled. The irradiation density of the ions in the polymer film is increased when the beam intensity is increased, and the irradiation density of the ions in the polymer film is reduced when the beam intensity is reduced.

The method for controlling the beam intensity is not particularly limited. For example, the beam intensity can be controlled by a beam chopper and/or a beam buncher disposed in the path of the ion beam between the ion source of the ions and the cyclotron. In this case, in particular, when both the beam chopper and the beam buncher are used, the beam intensity can be controlled more accurately and quickly.

The beam chopper is a device for applying a rectangular electric field transversely to a beam line so as to deflect ions in an ion beam transversely to the beam line. Since the ions deflected for more than a certain degree disappear without being injected into the cyclotron, the beam intensity can be controlled by controlling the electric field application time at the beam chopper.

The beam buncher is a device for applying a high-frequency electric field to an ion beam in its traveling direction so as to compress (to bunch) the beam in that direction. If an ion beam from an ion source is injected directly into a cyclotron, ions out of the acceleration phase are lost without being accelerated. The beam intensity can be increased by bunching the ion beam so that its phase matches the acceleration phase. Conversely, the beam intensity can be decreased by bunching the ion beam so that its phase shifts out of the acceleration phase.

The maximum beam intensity is determined by the amount of ions (current value) extracted per unit time from an ion source as an ion generator. A beam chopper and a beam buncher cannot increase the maximum beam intensity itself. Therefore, in the case where a beam chopper and/or a beam buncher is used for the control of the beam intensity, it is preferable to perform the control in the following manner: (1) the state in which the beam chopper and/or the beam buncher is optimized (the state in which the maximum beam intensity can be obtained) is established; (2) then, the beam intensity is intentionally reduced to deviate from the optimal state so that a polymer film be irradiated with an ion beam with a reduced beam intensity; and (3) the state of the beam chopper and/or the beam buncher is changed according to a change in the detected beam current value. In such a control, the state of the beam chopper and/or the beam buncher can be changed to the above-mentioned state in which the maximum beam intensity can be obtained, and thus the control can be performed more reliably to increase the beam current value.

In the production method of the present disclosure, as the irradiation conditioning factor in the irradiation of the polymer film with the ion beam, the irradiation time of the ion beam on the polymer film may be controlled. The irradiation density of the ions in the polymer film is increased when the irradiation time of the ion beam is increased, and the irradiation density of the ions in the polymer film is reduced when the irradiation time is reduced. This method is simpler than the control of the beam intensity. The irradiation time of the ion beam on the polymer film refers to the period of time during which a region of the film is irradiated with the ion beam. For example, in the case where the polymer film is moved transversely to the ion beam so as to irradiate the polymer film with the ion beam when the polymer film passes transversely across the ion beam, the period of time from the beginning of the irradiation of a region of the polymer film to the end of the irradiation of the region, both of which are induced by the transverse movement to the ion beam, corresponds to the irradiation time of the ion beam on the region of the film.

The method for controlling the irradiation time is not particularly limited. In the production method of the present disclosure, a strip-shaped porous polymer film can be produced continuously using a strip-shaped polymer film. In this case, for example, the irradiation time may be controlled in the following manner. In the irradiation step (I), the polymer film having a strip shape is fed from a supply roll on which the polymer film is wound and the fed polymer film is moved transversely to the ion beam so as to irradiate the polymer film with the ion beam when the polymer film passes transversely across the ion beam (to cause the ions 2 to collide with the polymer film), and the irradiation time is controlled by controlling the moving speed of the polymer film when the polymer film passes transversely across the ion beam. The irradiation time of the ion beam is increased when the moving speed is reduced, and the irradiation time of the ion beam is reduced when the moving speed is increased. When the polymer film passes transversely across the ion beam, the moving speed may be temporarily zero or may be reduced stepwise to zero (the movement of the polymer film may be stopped). The moving speed may be temporarily negative (the polymer film may be temporarily moved backward). The polymer film may be allowed to pass transversely across the ion beam by moving the beam itself. Any of the above-described various movements of the polymer film and the movement of the ion beam itself may be combined. The ion beam irradiation conditioning factor can be controlled by any of these.

In the production method of the present disclosure, as the irradiation conditioning factor in the irradiation of the polymer film with the ion beam, a combination of the beam intensity and the irradiation time of the ion beam on the polymer film may be controlled.

The method for detecting the beam current value in the irradiation step (I) is not particularly limited. For example, a metal for current trapping may be disposed in the path of the ion beam so as to obtain the beam current value based on the amount of charge trapped (collected) by the wire.

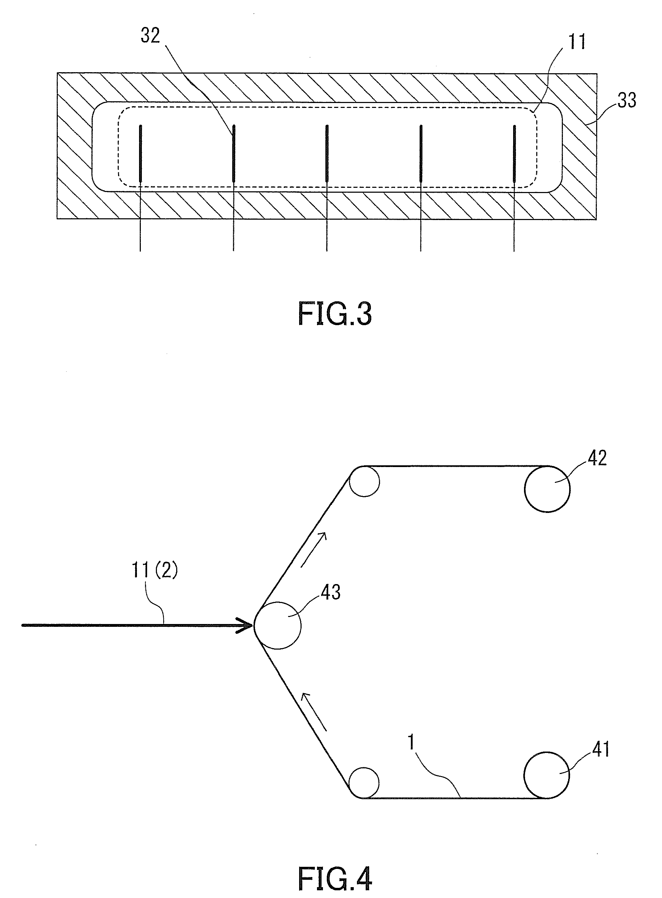

An example of the metal disposed to trap current is a current trapping wire. The current trapping wire is a conductive wire disposed to project into the beam line, and at least a part of the wire is connected to an electronic circuit. Some of the ions traveling in the beam line are trapped by the wire and are detected as an electric current. This electric current is corrected based on the previously obtained relationship between the trapped current and the beam current value. Thus, the beam current value can be obtained. One current trapping wire or two or more current trapping wires may be disposed for the ion beam whose current value is to be obtained. When two or more current trapping wires are disposed, the beam current value can be obtained with higher accuracy. In addition, the uniformity of the ion beam (i.e., the uniformity of the beam intensity distribution in the cross section of the beam perpendicular to the direction of the beam: since the cross section of the ion beam is much larger than the size of each ion, the amount of ions (ion intensity) passing through the cross section may vary from place to place) can be evaluated. FIG. 3 shows an example of the arrangement of the current trapping wires suitable for evaluating the uniformity of the ion beam. In the example shown in FIG. 3, five current trapping wires 32 are arranged at regular intervals in an ion beam 11 having a rectangular cross section. In FIG. 3, the reference numeral 33 indicates a beam duct 33 through which the ion beam 11 passes.

The current trapping wire is made of a conductive material. For example, a gold-plated tungsten wire, a tungsten wire, or a tungsten-rhenium alloy wire can be used.

The current trapping wire having a smaller diameter blocks the ion beam to a lesser extent. Therefore, depending on its diameter, the wire can be disposed upstream of the polymer film in the beam line. When the current trapping wire is disposed downstream of the polymer film, it cannot detect the ions which have not passed through the polymer film. Therefore, when it is disposed upstream of the polymer film, it can detect the beam current value with higher accuracy. Given that the current trapping wire is disposed upstream of the polymer film in the beam line, its diameter is preferably 0.5 to 5 mm. However, depending on the combination of the type of ions (ionic species) and their energy and the material of the current trapping wire, it may block the ions in the ion beam to a greater extent even if the wire has a diameter within the above range. In that case, minimization of the diameter of the current trapping wire or disposing of the current trapping wire downstream of the polymer film in the beam line can be considered. The current trapping wires can also be disposed both upstream and downstream of the polymer film in the beam line.

As described above, in the production method of the present disclosure, the beam current value may be detected by the current trapping wire disposed upstream and/or downstream of the polymer film in the beam line. In order to irradiate the polymer film with the ions at an irradiation density closer to the predetermined density, it is preferable to dispose the current trapping wire as close to the polymer film as possible.

Another example of the metal disposed for current trapping is a Faraday cup. The specific structure of the Faraday cup is not particularly limited, and any known Faraday cup can be used. However, since the Faraday cup blocks the ion beam, it is necessary to dispose the Faraday cup downstream of the polymer film to be irradiated with the ion beam. Thus, in the production method of the present disclosure, the beam current value may be detected by the Faraday cup disposed downstream of the polymer film in the beam line. In this case, another current trapping metal, e.g., a current trapping wire can be used in combination as long as the irradiation step (I) can be carried out.

As described above, in the production method of the present disclosure, a strip-shaped porous polymer film can be produced continuously using a strip-shaped polymer film. In that case, for example, a roll for moving the polymer film may be used as a current trapping metal. FIG. 4 shows an example of this embodiment.

In the example shown in FIG. 4, the polymer film 1 having a strip shape is fed from a supply roll 41 on which the polymer film 1 is wound and the fed polymer film 1 is moved to an irradiation target roller 43 disposed in the path of the ion beam so as to irradiate the polymer film 1 with the ion beam when the polymer film 1 passes over the irradiation target roller 43. Here, the irradiation target roller 43 has a conductive layer formed on the surface thereof, and thus the beam current value is detected by the irradiation target roller 43 in which the conductive layer serves as a collecting electrode. In this case, another current trapping metal, e.g., a current trapping wire can be used in combination as long as the irradiation step (I) can be carried out.

In the example shown in FIG. 4, the polymer film 1 is irradiated with the ion beam 11 (ions 2) when it passes over the irradiation target roller 43, and then is wound directly on a take-up roll 42. In the irradiation step (I), the polymer film may be irradiated with the ion beam in this manner, i.e., by a so-called roll-to-roll method.

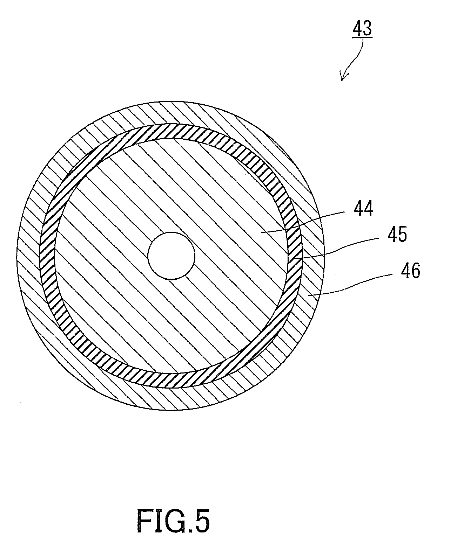

FIG. 5 shows an example of the irradiation target roller 43. The irradiation target roller 43 shown in FIG. 5 has a structure in which an insulating layer 45 made of an insulating material and a conductive layer 46 made of a conductive material are formed in this order on the surface of a core 44 made of a metal. The structure of the irradiation target roller 43 is not limited as long as the irradiation target roller 43 has the conductive layer formed on the surface thereof and the beam current value can be detected using this conductive layer as a collecting electrode.

The above-described methods for controlling the irradiation conditioning factors and for detecting the beam current value can be arbitrarily combined as long as the irradiation step (I) can be carried out. It is also possible to automatically detect the beam current value and to automatically control the irradiation conditioning factors.

In the irradiation step (I), any known method can be applied to the irradiation of the polymer film with the ion beam composed of ions accelerated in the cyclotron, except for the above-described detection of the beam current value and control of the irradiation conditioning factors. For example, the ion source of the ions emitted to the polymer film is not particularly limited. The method for generating ions in the ion source, the specific configuration of the cyclotron, and the method for accelerating, in the cyclotron, the ions generated in the ion source are not particularly limited. The ion beam composed of the accelerated ions may be subjected to any processing as long as the effects of the present invention can be obtained.

For example, the ion beam with which the polymer film is irradiated in the irradiation step (I) may be obtained by folding the tail of an original beam composed of the ions accelerated in the cyclotron, inwardly toward the center of the original beam by nonlinear focusing.

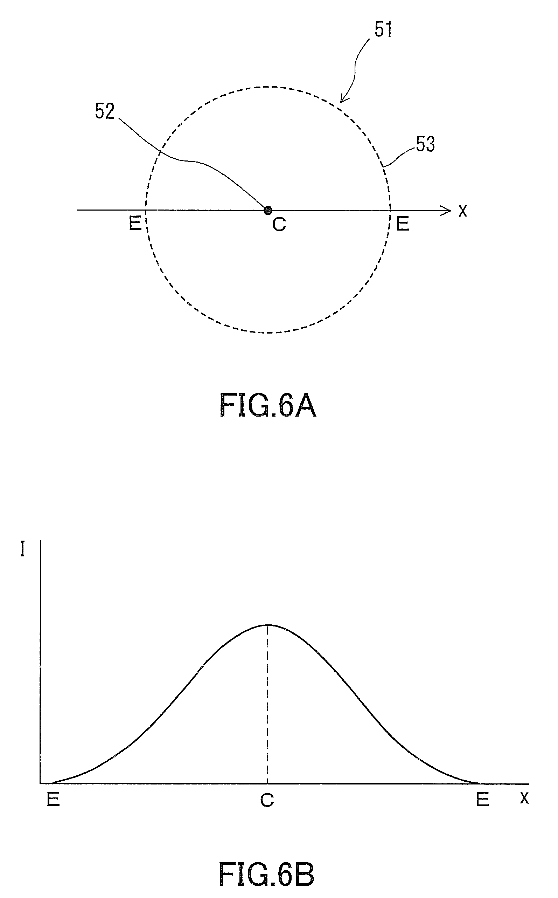

The intensity distribution of an ion beam composed of ions accelerated in a cyclotron (which can also be considered as the probability distribution of the presence of the ion particles in the beam) is not necessarily uniform across the beam. The ion beam usually has a cross-sectional intensity distribution profile (cross-sectional beam profile) in which the intensity is maximum at the center of the beam and continuously decreases from the center toward the tail of the beam, when the cross section of the beam is taken perpendicular to the direction of the beam (hereinafter, this cross section is simply referred to as the "cross section") (see, FIG. 6A and FIG. 6B). FIG. 6A shows the cross section of an example of such an ion beam 51, and the intensity distribution of the ion beam in this cross section is as shown in FIG. 6B, as indicated on the x axis (Point E - Point C - Point E) passing through the beam center 52 on the cross section. In FIG. 6B, the vertical axis indicates the normalized intensity I of the ion beam, which shows that the ion beam 51 has the maximum intensity at the beam center 52 (Point C). Point E at which the intensity is almost zero in FIG. 6B corresponds to the periphery 53 of the ion beam 51 indicated by a dashed line in FIG. 6A. The ion beam 51 shown in FIG. 6A and FIG. 6B is circular in cross section (has a circular periphery 53), and the beam intensity decreases continuously and isotropically from the beam center 52 toward the periphery. The term "isotropically" means that the same or similar beam intensity distribution (for example, the distribution shown in FIG. 6B) can be obtained on any axis passing through the beam center in the cross section of the ion beam. As shown in FIG. 6B, the ion beam 51 has an intensity distribution based on the normal distribution with the maximum intensity at the beam center 52. That is, the ion beam 51 has a cross-sectional intensity distribution profile of the normal distribution with the maximum intensity at the beam center. Such an ion beam can be obtained, for example, by allowing cyclotron-accelerated ions to pass through a scatterer formed of a metal thin film or the like.

On the other hand, an ion beam obtained by modifying the profile of this ion beam 51 as an original beam (i.e., an ion beam obtained by folding the tail of the ion beam 51) by nonlinear focusing may be used to irradiate the polymer film 1. Specifically, an ion beam obtained by folding the tail of the original beam inwardly toward the center of the original beam by nonlinear focusing may be used to irradiate the polymer film 1. Here, the original beam is composed of ions accelerated in a cyclotron and has a cross-sectional intensity distribution profile in which the intensity is maximum at the center of the original beam and continuously decreases from the center toward the tail of the original beam, when the cross section is taken perpendicular to the direction of the original beam. Thus, the polymer film 1 can be irradiated with the ion beam 11 having a more uniform cross-sectional intensity distribution than the original ion beam 51 having the above-mentioned cross-sectional intensity distribution profile. Combined with the control of the irradiation conditioning factors in the irradiation of the polymer film 1 with the ion beam 11 so that the polymer film 1 can be irradiated with the ions 2 at a predetermined collision density (irradiation density), this modification of the profile makes it easier to obtain porous polymer films having uniformly distributed openings and/or through holes continuously.

Since the irradiation with this ion beam 11 has high compatibility with the transverse movement of the polymer film 1 across the ion beam, a combination of these irradiation and movement significantly improves the productivity of porous polymer films having highly uniform porosity. Furthermore, since the ion beam 11 is also composed of cyclotron-accelerated ions, like the original beam 51, it is possible to obtain the effects resulting from the fact that the polymer film 1 can be continuously irradiated with highly-accelerated ions at a high density.

The folding of the tail of the original beam by nonlinear focusing can be achieved, for example, by application of nonlinear magnetic fields to the ion beam using multipole electromagnets placed in the path of the ion beam. Specific examples are disclosed in Yosuke Yuri, et al., "Uniformization of the transverse beam profile by means of nonlinear focusing method", Physical Review Special Topics: Accelerators and Beams, vol. 10, 104001 (2007).

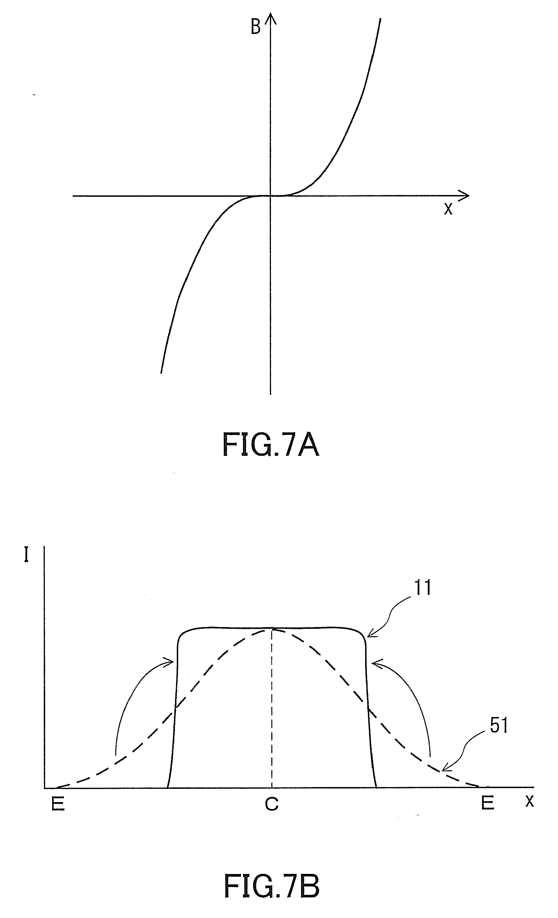

FIG. 7A and FIG. 7B show an example of the folding of the tail of the original beam by nonlinear focusing. Nonlinear focusing is a technique for applying a nonlinearly controlled magnetic field to an ion beam to focus the beam. For example, when a nonlinear magnetic field B shown in FIG. 7A is applied to the ion beam 51 (see FIG. 6B) having a cross-sectional intensity distribution profile of the normal distribution with the maximum intensity at the beam center, the tail of the intensity distribution of the original beam 51 indicated by a dashed line is folded inwardly toward the beam center, as shown in FIG. 7B. Thus, the ion beam 11 having an intensity distribution indicated by a solid line can be obtained. As understood from FIG. 7B, the uniformity of the cross-sectional intensity distribution of the ion beam 11 obtained by this folding is higher than that of the original beam 51.

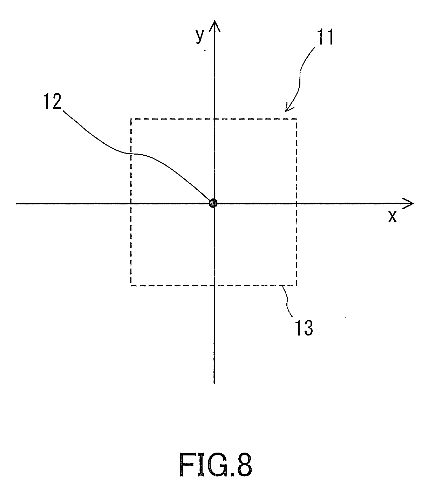

The intensity distribution profile of the ion beam 11 obtained by the folding by nonlinear focusing is not particularly limited. The profile has, for example, an approximately trapezoidal shape, as shown in FIG. 7B, when the profile is taken along one axis in the cross section of the beam. In order to increase the uniformity of the collision density of the ions in the polymer film 1, it is preferable to perform the folding so that the ion intensity in a region corresponding to the upper side of the trapezoid is as uniform as possible. Since the ion beam 11 is obtained by folding the tail of the original beam 51, it is often the case that the maximum intensity at the beam center 12 (see FIG. 8) is nearly unchanged from the maximum intensity at the beam center 52 of the original beam 51, that is, the maximum intensity of the ion beam 11 can be almost equal to that of the original beam 51. This means that not only the maximum intensity of the original beam 51 but also the maximum intensity of the folded ion beam 11 can be controlled with high accuracy by controlling the cyclotron.

Preferably, the cross-sectional shape (the shape of a periphery 13) of the ion beam 11 obtained by folding by nonlinear focusing is approximately rectangular, as shown in FIG. 8. In this case, efficient and uniform irradiation to the strip-shaped polymer film 1 can be performed. The rectangle includes a square. However, since the beam cannot necessarily be subjected to linear foldings, the resulting cross-sectional shape of the ion beam 11 may be slightly distorted into a "barrel-shape" or a "pincushion-shape" in some cases. The "approximately rectangular shape" includes these distorted cross-sectional shapes. The ion beam 11 having an approximately rectangular cross-sectional shape can be obtained, for example, by setting two axes (an x axis and a y axis) perpendicular to each other in the cross section of the original beam 51 and folding the original beam 51 by nonlinear focusing in these x and y axis directions respectively. The foldings in these axis directions may be performed separately or simultaneously.

The method for placing the polymer film in the beam line and the method for moving the polymer film also are not particularly limited as long as the irradiation step (I) can be carried out. In order to prevent attenuation of the energy of ions, the beam line is maintained at a high vacuum of, for example, about 10⁻⁵ to 10⁻³ Pa. It is possible to minimize the attenuation of the energy of ions before they collide with the polymer film by placing the polymer film in a chamber whose atmosphere is maintained at a vacuum as high as that in the beam line and irradiating the polymer film with an ion beam in that chamber.

The polymer film placed in a low vacuum atmosphere (for example, with a pressure of 100 Pa or more) or in an atmosphere with an atmospheric pressure may be irradiated with an ion beam that has passed through a beam line maintained at a high vacuum atmosphere from the cyclotron to the vicinity of the polymer film. In this case, it is possible not only to minimize the attenuation of the energy of ions in the beam line but also to obtain the following effects: (1) the time required to replace the polymer film can be reduced; and (2) when a roll on which a strip-shaped polymer film is wound is used, the influence of outgassing from the roll on the vacuum in the atmosphere can be minimized and thus a stable irradiation atmosphere can be obtained (an atmosphere with a pressure of 100 Pa or more is stable and easy to maintain when a roll of polymer film is used). In this case, a pressure barrier sheet can be disposed at the boundary between the high vacuum atmosphere and the low vacuum atmosphere or the atmospheric pressure atmosphere. The pressure barrier sheet is a sheet that is permeable to the ions enough to produce a porous polymer film, that is, enough to form openings and/or through holes by chemical etching in the etching step (II). The pressure barrier sheet is, for example, a metal sheet. The pressure barrier sheet is preferably a titanium sheet or an aluminum sheet.

The type of the ions to be applied to the polymer film and caused to collide with the polymer film is not limited. The ions are preferably those having a larger mass number than neon, specifically at least one selected from argon ions, krypton ions, and xenon ions, because these ions are less chemically reactive with the polymer constituting the polymer film. The shape of the tracks formed in the polymer film varies with the type and energy of the ions applied to the polymer film. In the case of argon ions, krypton ions, and xenon ions, if they have the same energy, ions of an atom having a lower atomic number can form longer tracks in the polymer film. The change in the shape of the tracks associated with the change in the ionic species and the change in the energy of the ions corresponds to the change in the shape of the pores formed in the etching step (II). Therefore, the ionic species and its energy can be selected according to the shape of the pores required for the porous polymer film.

In the case where the ions are argon ions, their energy is typically 100 to 1000 MeV. In the case where a polyethylene terephthalate film with a thickness of about 10 to 200 µm is used as the polymer film to form through holes therein, the energy of the ions is preferably 100 to 600 MeV. The energy of ions to be applied to the polymer film 1 can be adjusted according to the ionic species and the polymeric species constituting the polymer film.

The polymer constituting the polymer film is not particularly limited. Examples of the polymer include polyesters such as polyethylene terephthalate and polyethylene naphthalate, polycarbonates, polyimides, and polyvinylidene fluorides.

The thickness of the polymer film is, for example, 10 to 200 µm.

The polymer film may have a strip shape. In this case, the strip-shaped polymer film wound on a supply roll may be continuously or intermittently fed from the supply roll so as to irradiate the fed polymer film with the ion beam. This method makes it possible to perform the irradiation step (I) efficiently. Furthermore, the ion-beam-irradiated polymer film may be wound on a take-up roll so as to obtain a roll of the polymer film that has collided with the ions by the irradiation. This method makes it possible to produce the porous polymer film more efficiently.

In the case where the atmosphere in which the polymer film is placed (the atmosphere in which the polymer film is irradiated with the ion beam) is air and its pressure is an atmospheric pressure, the polymer film need not be placed in an enclosed space (for example, in a chamber) and may be placed in an open space. The supply roll and the take-up roll also may be placed in an open space. Also in this case, the polymer film may be placed in an enclosed space, of course.

In the case where the atmosphere in which the polymer film is placed is not air or the pressure of the atmosphere is lower than the atmospheric pressure, it is preferable to place the polymer film in an enclosed space, for example, in a chamber. It is also preferable to place the supply roll and the take-up roll in an enclosed space. That is, in the production method of the present disclosure, a roll of the polymer film that has collided with the ions may be obtained in the following manner. The supply roll on which the polymer film having a strip shape is wound and the take-up roll on which the polymer film irradiated with the ion beam (the polymer film that has collided with the ions) is to be wound are placed in a chamber. In the irradiation step (I), the polymer film is fed from the supply roll, the fed polymer film is irradiated with the ion beam, and then the polymer film that has collided with the ions by the irradiation is wound on the take-up roll. Thus, a roll of the polymer film that has collided with the ions is obtained.

In the irradiation step (I), the polymer film is irradiated with the ion beam, for example, from a direction perpendicular to the principal surface of the polymer film. In the example shown in FIG. 1, the film is irradiated with the ion beam in this manner. In this case, the porous polymer film having the pores extending in the direction perpendicular to the principal surface of the film is obtained in the etching step (II). In the irradiation step (I), the polymer film may be irradiated with the ion beam from a direction oblique to the principal surface of the polymer film. In this case, the porous polymer film having the pores extending in the direction oblique to the principal surface of the film is obtained in the etching step (II). The direction in which the polymer film is irradiated with the ion beam can be controlled by a known means.

In the irradiation step (I), the film is irradiated with the ion beam, for example, so that the tracks of the ions are parallel to each other. In the example shown in FIG. 1, the film is irradiated with the ion beam in this manner. In this case, the porous polymer film having the pores extending in parallel to each other is obtained in the etching step (II). In the irradiation step (I), the film may be irradiated with the ion beam so that the tracks of the ions are non-parallel to each other (for example, the directions of the tracks are randomly distributed). The track of the ion beam (tracks of the ions) applied can be controlled by a known means.

A device for performing the irradiation step (I) includes, for example, an ion gas source, an ion source device for ionizing a gas, an electromagnet for deflecting a beam of ions, a cyclotron, a beam duct including a beam line of the ions accelerated in the cyclotron, a multipole electromagnet for focusing and shaping the ion beam, a vacuum pump for maintaining the path of the ion beam at a predetermined vacuum, a chamber in which a polymer film is to be placed, a moving device of the polymer film, a detection device of a beam current value, a control device of the irradiation conditioning factors in the irradiation of the polymer film with the ion beam based on the detected beam current value, and others.

### [Etching Step (II)]

In the etching step (II), the polymer film that has collided with the ions in the ion beam in the irradiation step (I) is chemically etched so as to form the openings and/or the through holes corresponding to the tracks left by the colliding ions in the polymer film and obtain the porous polymer film.

As the etching agent for the chemical etching, for example, acid or alkali can be used. The chemical etching can be performed according to a known method.

The pore diameter of the pores having the openings or the pores serving as the through holes varies depending on the ionic species used in the irradiation step (I) and its energy. The pore diameter is, for example, 0.01 to 10 µm. These pores normally extend linearly.

The direction in which the pores extend can be a direction perpendicular to the principal surface of the porous polymer film.

The density of the pores in the obtained porous polymer film can be controlled by the ionic species used in the irradiation step (I), and the energy and the collision density (irradiation density) of that ionic species.

The production method of the present disclosure may include an optional step, for example, a step of accelerating etching, in addition to the steps (I) and (II) as long as the effects of the present invention can be obtained.

Porous polymer films produced by the production method of the present disclosure can be used in the same applications as those of conventional porous polymer films. The applications are, for example, waterproof air-permeable filters, waterproof sound-transmitting membranes, porous electrode sheets, and article suction sheets.

The present invention is applicable to other embodiments as long as they do not depart from the spirit or essential characteristics thereof. The embodiments disclosed in this description are to be considered in all respects as illustrative and not limiting. The scope of the invention is indicated by the appended claims rather than by the foregoing description, and all changes which come within the meaning and range of equivalency of the claims are intended to be embraced therein.

### INDUSTRIAL APPLICABILITY

Porous polymer films produced by the production method of the present invention can be used in the same applications as those of conventional porous polymer films.

## Claims

1. A method for producing a porous polymer film, comprising:
(I) irradiating a polymer film with an ion beam composed of ions accelerated in a cyclotron so as to form a polymer film that has collided with the ions in the beam; and
(II) chemically etching the formed polymer film so as to form openings and/or through holes corresponding to tracks left by the colliding ions in the polymer film,
wherein in the irradiation (I),
a beam current value of the ion beam is detected upstream and/or downstream of the polymer film in a path of the ion beam, and
an irradiation conditioning factor in the irradiation of the polymer film with the ion beam is controlled based on the detected beam current value so that the polymer film can be irradiated with the ions at a predetermined irradiation density.

2. The method for producing a porous polymer film according to claim 1, wherein as the irradiation conditioning factor, an intensity of the ion beam is controlled.

3. The method for producing a porous polymer film according to claim 2, wherein the intensity of the ion beam is controlled by a beam chopper and/or a beam buncher disposed in the path of the ion beam between an ion source of the ions and the cyclotron.

4. The method for producing a porous polymer film according to claim 1, wherein as the irradiation conditioning factor, an irradiation time of the ion beam on the polymer film is controlled.

5. The method for producing a porous polymer film according to claim 4, wherein in the irradiation (I),
the polymer film having a strip shape is fed from a supply roll on which the polymer film is wound and the fed polymer film is moved transversely to the ion beam so as to irradiate the polymer film with the ion beam when the polymer film passes transversely across the ion beam, and
the irradiation time is controlled by controlling a moving speed of the polymer film when the polymer film passes transversely across the ion beam.

6. The method for producing a porous polymer film according to claim 1, wherein the beam current value is detected by a current trapping wire disposed upstream and/or downstream of the polymer film in the path of the ion beam.

7. The method for producing a porous polymer film according to claim 1, wherein the beam current value is detected by a Faraday cup disposed downstream of the polymer film in the path of the ion beam.

8. The method for producing a porous polymer film according to claim 1, wherein in the irradiation (I),
the polymer film having a strip shape is fed from a supply roll on which the polymer film is wound and the fed polymer film is moved to an irradiation target roller disposed in the path of the ion beam so as to irradiate the polymer film with the ion beam when the polymer film passes over the irradiation target roller,
the irradiation target roller has a conductive layer formed on a surface thereof, and
the beam current value is detected by the irradiation target roller in which the conductive layer serves as a collecting electrode.

9. The method for producing a porous polymer film according to claim 1, wherein the ion beam with which the polymer film is irradiated in the irradiation (I) is obtained by folding a tail of an original beam inwardly toward a center of the original beam by nonlinear focusing, the original beam being composed of the ions accelerated in the cyclotron and having a cross-sectional intensity distribution profile in which the intensity is maximum at the center of the original beam and continuously decreases from the center toward the tail of the original beam, and the profile being an intensity distribution profile in a cross section perpendicular to a direction of the original beam.
